(19) Europäisches Patentamt / European Patent Office / Office européen des brevets

(11) **EP 3 293 971 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(51) Internationale Patentklassifikation (IPC):
**H04N 7/18** (2006.01)

(21) Anmeldenummer: **17180948.6**

(22) Anmeldetag: **12.07.2017**

(52) Gemeinsame Patentklassifikation (CPC):
**G01C 11/04; B60R 1/00; B62D 53/00; G01B 11/24; G06K 9/62; G06V 20/58; G06V 20/588; G06V 20/64; H04N 7/181;** B60R 2300/8046

(54) **VERFAHREN ZUR NACHFÜHRUNG EINES BILDAUSSCHNITTS**

METHOD FOR REPRODUCING A SECTION OF AN IMAGE

PROCÉDÉ DE MISE À JOUR D'UNE SECTION D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2016 DE 102016216962**

(43) Veröffentlichungstag der Anmeldung:
**14.03.2018 Patentblatt 2018/11**

(73) Patentinhaber: **Continental Automotive GmbH 30165 Hannover (DE)**

(72) Erfinder: **Weinlich, Andreas 78048 Villingen-Schwenningen (DE)**

(74) Vertreter: **Continental Corporation c/o Continental Teves AG & Co. OHG Intellectual Property Guerickestraße 7 60488 Frankfurt a. Main (DE)**

(56) Entgegenhaltungen:
WO-A2-2016/024405    DE-A1- 10 351 655
DE-A1-102010 006 323    DE-A1-102014 018 040
JP-A- 2002 181 518

**Beschreibung**

Die vorliegende Erfindung betrifft ein Verfahren zur Nachführung eines Bildausschnitts eines Kamerabildes, der auf einem Monitor zum Ersatz eines Außenspiegels eines Fahrzeugs dargestellt wird, insbesondere bei Kurvenfahrt eines aus dem Fahrzeug und einem Anhänger bestehenden Gespanns.

Die JP 2002 181 518 A offenbart ein mit einem Anhänger verbundenes Kraftfahrzeug. Dieses Kraftfahrzeug umfasst eine Kamera, mittels welcher der Anhänger erfassbar ist. Anhand von mittels der Kamera aufgezeichneten Bilddaten des Anhängers wird ein Kupplungswinkel des Anhängers relativ zu dem Kraftfahrzeug ermittelt.

In der DE 10 2010 006 323 A1 wird gelehrt, dass man mittels einer Stereokamera eine Objekterkennung durchführen und anhand des optischen Flusses im Kamerabild die Position eines Anhängers bestimmen kann.

Aus der WO 2016/024405 A2 ist ein Verfahren zur Nachführung eines auf einem Monitor zum Ersatz eines Außenspiegels eines Fahrzeugs dargestellten Bildausschnitts eines Kamerabildes eines aus dem Fahrzeug und einem Anhänger bestehenden Gespanns bei Kurvenfahrt bekannt. Dort wird ein Monitorsystem als Ersatz für einen Rückspiegel gezeigt, bei dem der dargestellte Bildausschnitt der Bewegung der Kopfposition des Fahrers angepasst wird. Der Fahrer bewegt den Kopf, wenn der Anhänger bei Kurvenfahrt auf einem konventionellen Rückspiegel nach "außen" wandert, um das Ende des Anhängers weiterhin im Blick zu haben. Die Bewegung der Kopfposition des Fahrers wird dazu detektiert. Dazu ist eine zuverlässige Bewegungsdetektion erforderlich, was im Allgemeinen nur aufwendig realisierbar ist. Kopfbewegungen des Fahrers, die aus anderen Gründen als zur Änderung des für den Fahrer im herkömmlichen Rückspiegel sichtbaren Bildausschnitts erfolgen, führen zu unerwünschten Anpassungen des Bildausschnitts auf dem Monitor.

Es wird ein demgegenüber verbessertes Verfahren zur Nachführung des Bildausschnitts vorgeschlagen.

Erfindungsgemäß wird zunächst ein dreidimensionales Modell mit der Objektposition zumindest eines Objekts aus dem Kamerabild und vorgegebenen Modellierungsparametern bestimmt. Neben dem Anhänger werden sinnvollerweise auch Objekte der Umgebung, wie andere Fahrzeuge, Gebäude, Personen oder andere, sich in der Nähe des Fahrzeugs befindende Gegenstände im Modell bestimmt. Wie ein derartiges Modell bestimmt wird ist beispielsweise aus K. Häming, G. Peters (2010) "The structure-from-motion reconstruction pipeline - a survey with focus on short image sequences", Kybernetika, bekannt. Weiterhin wird aus dem Kamerabild ein Bewegungsvektor zu zumindest einem markanten Punkt auf dem Anhänger bestimmt. Idealerweise handelt es sich bei einem der Punkte um eine Hinterkante des Anhängers, die sich bei Kurvenfahrt innerhalb des Kamerabildes bewegt, und auch dann für den Fahrer im Monitor sichtbar sein soll. Ein von Null abweichender Bewegungsvektor der Hinterkante deutet auf Kurvenein- oder -ausfahrt hin, was ein Nachführen des auf dem Monitor dargestellten Bildausschnitts erforderlich macht. Aus der Objektposition und Informationen, die aus der Bestimmung der Bewegungsvektoren gewonnen werden, wird dann die wahrscheinlichste Position der Kante bestimmt. Stimmt die Verschiebung von aus dem Modell gewonnenen Objektpositionen für aufeinanderfolgende Kamerabilder mit dem Bewegungsvektor überein, so ist die Wahrscheinlichkeit hoch, dass es sich um die korrekt bestimmte Position der Kante handelt. Stimmen diese nicht überein, so ist dies weniger wahrscheinlich. Der Bildausschnitt wird dann entsprechend der wahrscheinlichsten Position der Kante nachgeführt. Die auf diese Weise bestimmte wahrscheinlichste Position der Hinterkante ermöglicht eine zuverlässigere Nachführung des Bildausschnitts bei relativ niedrigem Berechnungsaufwand. Solange man nicht weiß, wo die Hinterkante ist, kann man auch nicht genau dort einen Vektor bestimmen. Stattdessen werden mehrere Vektoren an markanten Bildpositionen, wie zum Beispiel Eck- oder Kantenpunkte der Anhängerplanenbeschriftung, bestimmt. Dabei wird angenommen, dass wahrscheinlich einer davon tatsächlich auf der Hinterkante liegt. Dies ist jedoch zur Funktion des erfindungsgemäßen Verfahrens nicht notwendig. Für die Funktionalität des Verfahrens ist es auch günstig, wenn zumindest ein Vektor zudem auf die Umgebung, den Boden, fällt.

Vorteilhafterweise werden folgende Annahmen und Parameter für die Modellierung verwendet: Die Umgebung wird im ersten Ansatz als flache Ebene angenommen. Der Anhänger wird als Quader mit senkrecht zur flachen Ebene stehenden Seitenflächen angenommen. Als Parameter werden der Kupplungspunkt von Fahrzeug und Anhänger sowie die Breite und die Länge des Anhängers genommen. Mit dieser geringen Anzahl von Annahmen und Parametern wird eine für den zu erreichenden Zweck hinreichend gute Modellierung erreicht, die keine allzu hohen Anforderungen an die Rechenleistung stellt. Da man im schlechtesten Fall keinerlei Informationen darüber besitzt, welche Art von Anhänger angehängt ist, wird hier davon ausgegangen, dass es lediglich einen Knickpunkt gibt, dass es nur eine Hinterachse gibt, dass diese sich in einem bekannten und gleichbleibenden Abstand von der Anhängerhinterkante befindet, dass die Hinterkante nicht mitlenkt und so weiter. Alle diese Unsicherheiten fließen über die Varianz in das Modell ein. Bekannte Approximationen im Modell werden gegebenenfalls über erhöhte Varianz berücksichtigt.

Erfindungsgemäß wird der Kupplungspunkt von Fahrzeug und Anhänger als fester Parameter angenommen, dessen Position aus der Fahrzeuggeometrie und der festen Position der Kamera bekannt ist. Für die Breite und die Länge des Anhängers werden im ersten Ansatz die maximal üblichen Werte angenommen, da das Fahrzeug mit unterschiedlichen Anhängern betrieben werden kann. Auch ein und derselbe Anhänger kann unterschiedliche Konfigurationen aufweisen. Diese Schätzwerte werden im Vergleich mit den folgenden Kamerabildern an die Realität angepasst. Diese Parameterwahl hat den Vorteil, eine gute Startkonfiguration zu liefern, die leicht an die tatsächliche Konfiguration anpassbar ist.

Gemäß der Erfindung werden Positionsvarianzwerte zu Objektpositionen des dreidimensionalen Modells bestimmt sowie Bewegungsvektorvarianzwerte zu den Bewegungsvektoren. Die wahrscheinlichste Position der Kante wird dann bestimmt als Wert, an dem die A-Posteriori-Wahrscheinlichkeit einen Maximalwert erreicht. Die Varianzwerte lassen sich aus den Verfahren zur Bestimmung von Position und Bewegungsvektor leicht bestimmen. Ihr Produkt liefert eine gute Aussage über die wahrscheinlichste Kantenposition.

Vorteilhafterweise werden Bewegungsvektor und Bewegungsvarianzwert aus dem dreidimensionalen Modell für zumindest ein Objekt bestimmt. Das Objekt ist der Anhänger, für weitere Objekte ist diese Bestimmung ebenfalls sinnvoll. Ebenfalls vorteilhaft ist es, Bewegungsvektor und Bewegungsvarianzwert zu zumindest einem markanten Punkt der hinteren Kante des Anhängers zu bestimmen. Auch eine kombinierte Verwendung der Varianzwerte aus Modell und aus Kantendetektion als Produkt hat sich als sinnvoll herausgestellt.

Eine erfindungsgemäße Steuerungseinheit weist eine Modellbildungseinheit, eine Bewegungsvektor-Bestimmungs-Einheit, eine Kantenpositions-Bestimmungs-Einheit und eine Bildausschnitt-Nachführungs-Einheit auf. Funktion und Vorteile entsprechen denjenigen, die zum Verfahren beschrieben sind.

In anderen Worten betrifft die Erfindung ein Kamera-MonitorSystem zum Ersatz des Außenspiegels in LKWs, um Treibstoffkosten einzusparen. Eine Nachführung des auf dem Display angezeigten Bildausschnittes nach außen ist bei angehängtem Anhänger in Kurvenfahrten notwendig, um dem Fahrer die Sicht auf die Hinterkante seines Anhängers anstatt nur auf dessen Seitenplane zu ermöglichen. Insbesondere beim Rangieren ergibt sich diese Notwendigkeit auch durch die wegfallende Möglichkeit, durch Bewegung des Kopfes das Sichtfeld zu verändern, wie dies bei herkömmlichen Spiegeln der Fall ist.

Für die Nachführung wird eine automatische Erkennung der aktuellen x-/y-Position der vertikalen Hinterkante des Anhängers im Bild vorgeschlagen. Da sich die Hinterkante über eine gewisse Länge erstreckt, gelten für die y-Position gewisse Vorgaben, zum Beispiel soll sie einen Meter über dem Boden erkannt werden. Zu beachten ist hierbei, dass eine Vielzahl verschiedener Anhänger verwendet werden können, und dass die Rechenleistung des Bildverarbeitungssystems sehr stark eingeschränkt ist.

Auf Einzelbildern basierende Kantendetektionsverfahren, wie die sogenannte "Canny edge detection", sind für die gegebene Aufgabe größtenteils ungeeignet, da oftmals viele weitere Kanten im Bild enthalten sind. Diese Kanten sind unter anderem Struktur und Bedruckung der LKW Anhängerplane, Fahrspurmarkierungen auf der Straße, sichtbare Fremdfahrzeuge, weitere Objekte der Umgebung wie z. B. Beschilderung und Bauwerke. Kanten dieser Objekte sind nicht in jeder Situation und mit überschaubarem Rechenaufwand von der Anhängerhinterkante zu unterscheiden.

Umgebungsrekonstruktions- und Objekterkennungsverfahren wie zum Beispiel das sogenannte "Structure-from-motion" Verfahren bedienen sich daher der leicht verschobenen Position von markanten Objektpunkten in mehreren, aus unterschiedlichen Positionen aufgenommenen Bildern, die beispielsweise von unterschiedlichen Kameras stammen oder bei bewegter Kamera zu aufeinanderfolgenden Zeitpunkten aufgezeichnet wurden. Hierbei wird insbesondere die unterschiedliche Verschiebung von Vordergrund- und Hintergrundobjekten genutzt. Diese treten aufgrund von unterschiedlichen Abständen zur Kamera oder aufgrund von unabhängiger Objektbewegung auf.

Sowohl eine Bewegung der Kamera zusammen mit dem LKW, als auch eine Bewegung des Anhängers unabhängig von seiner Umgebung ist bei typischen Fahrsituationen gegeben. Kritisch ist jedoch nach wie vor eine robuste Erkennung, Lokalisierung und Unterscheidung der Anhängerkante von anderen Objektkanten im Bild.

Gemäß der Erfindung wird in einem ersten Schritt ein dreidimensionales Modell der Umgebung bestimmt, in einem zweiten Schritt eine Bewegungsvektorvorhersage durchgeführt und in einem dritten Schritt eine Schätzung der Position der Hinterkante des Anhängers vorgenommen.

Die Erfindung ist geeignet, die Hinterkante von Anhängern bei Nutzfahrzeugen oder PKWs zu erkennen. Dabei kann die Kamera sowohl eine nach hinten gerichtete Kamera zum Erzeugen eines Rückspiegel-Ersatz-Bildes sein als auch eine andere geeignete Kamera, wie beispielsweise eine Rückfahrkamera.

Vorteile der Erfindung sind unter anderem: Es werden Bewegungsunstetigkeit als auch Intensitätsunstetigkeit im Bild berücksichtigt. Das erfindungsgemäße Verfahren ist robust gegenüber Unstetigkeiten in der Bildintensität, wie beispielsweise Struktur und Bedruckung der LKW Anhängerplane, Fahrspurmarkierungen auf der Straße, sichtbare Fremdfahrzeuge, weitere Objekte der Umgebung wie Beschilderung, Bauwerke oder ähnliches. Das Verfahren ist ebenfalls robust gegenüber nicht-relevanter Bewegung, wie beispielsweise vorbeifahrenden Fahrzeugen, Bewegungsvektorunstetigkeiten von statischen Objekten wie Verkehrszeichen oder ähnlichem, sich bewegenden Spiegelungen auf der Anhängerplane, oder bewegte Schatten. Das erfindungsgemäße Verfahren ist auch robust gegenüber schlechter Bewegungsvektorschätzung. Durch Hinzunahme der geschätzten Kantenposition aus vorherigen Bildern springt die erkannte Kante typischerweise nicht von Bild zu Bild. Weiterhin werden Unsicherheiten im Modell direkt gegeneinander abgewogen und führen unter der zur Verfügung stehenden Information zu der wahrscheinlichsten Kantenposition. Gemäß einer Variante des Verfahrens wird die Verlässlichkeit der Bewegungsvektoren berücksichtigt. Durch die adaptive Initialisierung der Bewegungsvektorbestimmung werden bereits in diesem Schritt Fehlschätzungen unwahrscheinlicher.

Das erfindungsgemäße Verfahren erfordert nur einen geringen Rechenaufwand, und ist daher geeignet für die Verwendung in eingebetteten Systemen.

Weitere Vorteile und Varianten der Erfindung sind auch der folgenden Beschreibung von Ausführungsbeispielen anhand der Figuren zu entnehmen. Dabei zeigen:

Fig. 1 Gespann, in dem ein erfindungsgemäßes Verfahren implementiert ist;

Fig. 2 Monitor und Außenspiegel aus Fig. 1 aus Sicht des Fahrers;

Fig. 3 Modell eines Gespanns mit Umgebung in Draufsicht;

Fig. 4 Monitor mit unterschiedlichen Bildausschnitten;

Fig. 5 erfindungsgemäße Steuerungseinheit und Flussdiagramm des erfindungsgemäßen Verfahrens.

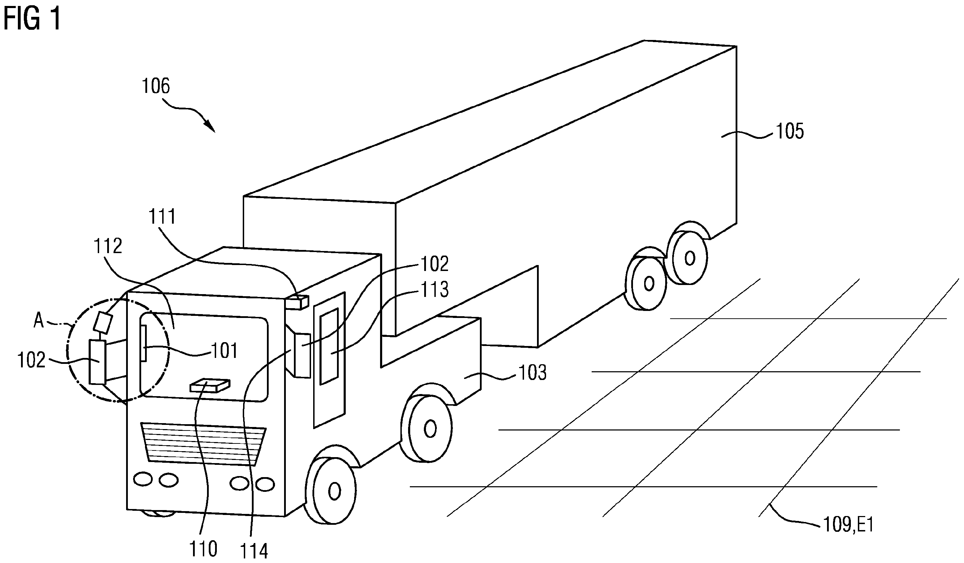

Figur 1 zeigt ein Gespann 106 bestehend aus Fahrzeug 103 und Anhänger 105. Die Umgebung 109 des Gespanns 106 ist hier schematisch als Ebene E1 dargestellt. Das Fahrzeug 103 ist mit einer Steuerungseinheit 110 zur Verarbeitung eines Kamerabildes einer Kamera 111 ausgestattet. Die Steuerungseinheit 110 berechnet gemäß dem erfindungsgemäßen Verfahren einen Bildausschnitt, der auf einem im Innenraum des Fahrzeugs 103 angebrachten Monitor 101 dargestellt wird. Dieser Bildausschnitt entspricht dem, was der Fahrer des Fahrzeugs 103 üblicherweise in seiner normalen Sitzposition auf den Außenspiegeln 102 sieht beziehungsweise was er durch Drehen oder Verschieben des Kopfes dort sehen kann. Der eingekreiste Bereich A zeigt den Übergangsbereich zwischen Windschutzscheibe 112 und rechtem Seitenfenster 113 (hier nicht sichtbar). Der Bereich A wird in der folgenden Abbildung aus Sicht des Fahrers gezeigt.

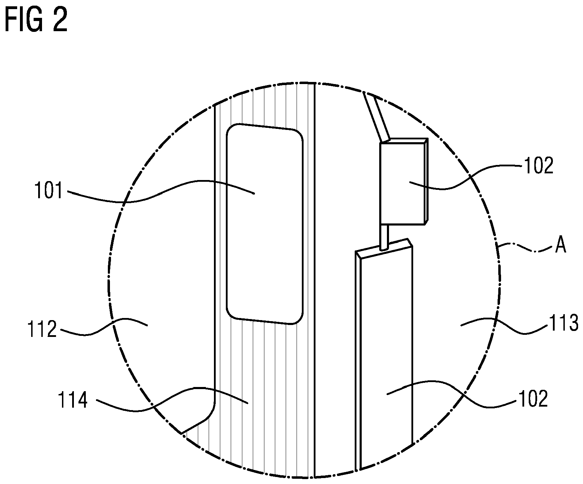

Figur 2 zeigt den Monitor 101 und den Außenspiegel 102 aus Bereich A der Figur 1 aus Sicht des Fahrers im rechten Teil des Innenraums des Fahrzeugs 103. Der Monitor 101 ist an der A-Säule 114 der Fahrerkabine angebracht. Er verdeckt daher keinen Bereich der Windschutzscheibe 112 oder der Seitenfenster 113. Durch das Seitenfenster 113 sieht man den hier aus zwei Teilen bestehenden Außenspiegel 102 auf der rechten Seite des Fahrzeugs 103. Der Außenspiegel 102 verdeckt einen Teil des Sichtfeldes des Fahrers und wird daher durch den Monitor 101 ersetzt. Er ist hier nur zur Verdeutlichung und zum Vergleich mit der herkömmlichen Lösung dargestellt.

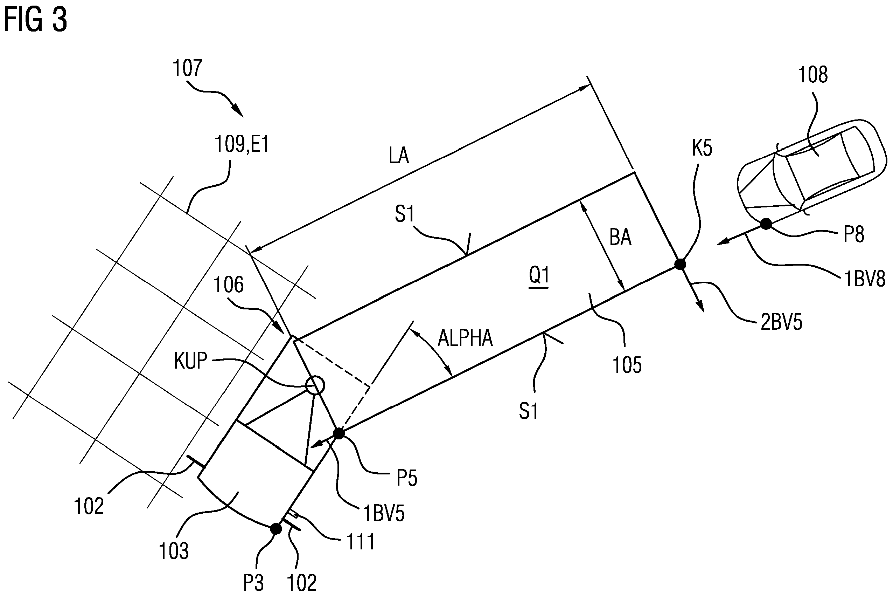

Figur 3 zeigt ein dreidimensionales Modell 107 des Gespanns 106 mit Umgebung 109 in zweidimensionaler Draufsicht. Die Umgebung 109 ist als flache Ebene E1 schematisch als Rechteckmuster im linken Teil der Abbildung dargestellt. Das Fahrzeug 103 ist parallel zum Rechteckmuster der Ebene E1, der Anhänger 105 im Knickwinkel ALPHA dazu ausgerichtet. Fahrzeug 103 und Anhänger 105 sind über einen Kupplungspunkt KUP miteinander verbunden. Am Fahrzeug 103 erkennt man die bereits beschriebenen Außenspiegel 102 und die Kamera 111. Hinter dem Gespann 106 ist ein PKW als Objekt 108 dargestellt. Die Positionen von Fahrzeug 103, Anhänger 105 und Objekt 108 sind durch die Objektpositionen P3, P5 und P8 angegeben. Eine Hinterkante des Anhängers 105 ist als Kante K5 angegeben. Die Bewegungen des Anhängers 105, des Objekts 108 und der Kante

K5 sind durch die Bewegungsvektoren 1BV5, 1BV8 und 2BV5 angegeben.

In einem ersten Schritt des erfindungsgemäßen Verfahrens wird ein dreidimensionales Modell 107 berechnet, das heißt die Positionen P5, P8 von von der Kamera 111 aufgenommenen Objekten 105, 108 inklusive deren Abstand. Mit Hilfe von intrinsischer und extrinsischer Offlinekalibrierung der Kamera 111 relativ zum Fahrzeug 103 sowie zum Boden ist es ermöglicht, Positionen P5, P8 im dreidimensionalen Raum eindeutig auf Positionen im zweidimensionalen Kamerabild 104, dem Pixelraum, funktional abzubilden. Eine einfache und recheneffiziente Methode zur Modellierung besteht darin, die Umgebung 109 als flache Ebene E1 (Boden) und den Anhänger 105 als Quader Q1 anzunehmen, dessen Seitenflächen S1 senkrecht zur den Boden darstellenden Ebene E1 stehen. Die Position der vertikalen hinteren Kante K5 des Anhängers wird damit von den Parametern Kupplungspunkt KUP, Knickwinkel ALPHA des Anhängers 105 relativ zum Fahrzeug 103, sowie Breite BA und Länge LA des Anhängers 105 beeinflusst.

Abhängig von der Realisierung des Systems werden gemäß einer ersten Ausführungsform für einige dieser Parameter fixe Annahmen gemacht. Der Kupplungspunkt KUP ist bei fest verschraubter Kamera 111 bekannt, die Breite BA von Anhängern 105 entspricht typischerweise der erlaubten Maximalbreite von 2,55 m. Weitere Parameter werden mit geeigneten Verfahren aus dem Bild der Kamera 111 oder anderen zur Verfügung stehenden Seiteninformationen geschätzt. So bleibt die Länge LA des Anhängers während der Fahrt konstant, der Knickwinkel ALPHA ändert sich nur langsam. Gemäß einer anderen Ausführungsform werden diese Parameter als zusätzliche Varianz im Modell 107 berücksichtigt. Ebenso fließt die vereinfachte Modellannahme als Varianz ein.

Optional bleibt gemäß einer weiteren Ausführungsform einer der Parameter, zum Beispiel der Knickwinkel ALPHA, zunächst unbekannt und wird später in Abhängigkeit von der angenommenen Position der hinteren Kante K5 des Anhängers berechnet. Aufwendigere Verfahren machen gemäß weiterer Ausführungsformen anspruchsvollere Annahmen über die Beschaffenheit von Anhänger 105, beispielsweise andere Formen als Quader Q1, und Umgebung 109, beispielsweise mit zusätzlichen Objekten 108. Gemäß weiterer Ausführungsformen werden fortgeschrittenere Schätzverfahren, wie beispielsweise "structure-from-motion", oder zusätzliche Sensorik, wie Abstandssensoren, 3D-Kameras, oder ähnliches, eingesetzt. Im Idealfall entsteht hierbei eine Abstandsschätzung für alle sichtbaren Bildelemente.

In einem zweiten Schritt des erfindungsgemäßen Verfahrens wird eine Bewegungsvektorschätzung vorgenommen. Bei bekannten oder geschätzten Fahrzeuginformationen wie zum Beispiel Geschwindigkeit des Fahrzeugs 103 und Änderung des Knickwinkels ALPHA werden Bewegungen von Objekten 105, 108 im dreidimensionalen Raum relativ zur Kamera 111 bestimmt. Insbesondere betrifft dies Objekte 108 der Umgebung 109, insbesondere die Ebene E1, und den Anhänger 105. Mit Hilfe von Parametern der Kamera 111 wird die dreidimensionale Bewegung jedes Objekts 105, 108 auf einen zweidimensionalen Bewegungsvektor innerhalb des Kamerabildes 104 an der entsprechenden Bildposition abgebildet. Intrinsische Parameter sind dabei beispielsweise die Brennweite, das Bildsensorformat und der Brennpunkt. Extrinsische Parameter sind die Position, Hauptachse und Drehung der Kamera auf dieser Hauptachse. Dieses Verfahren lässt sich für jede beliebige Bildposition von Interesse anwenden. Oftmals unterscheiden sich dadurch Vektoren P8, 1BV8 von Objekten 108 der Umgebung 109 deutlich von Vektoren P5, 1BV5 des Anhängers 105. Ebenso wie im ersten Schritt werden auch hier durch Hinzunahme der Unsicherheit aus dem Modell 107 der Umgebung 109, sowie der Unsicherheit über die Fahrzeuginformation Varianzen S1BV5, S1BV8 für die Bewegungsvektoren 1BV5, 1BV8 bestimmt.

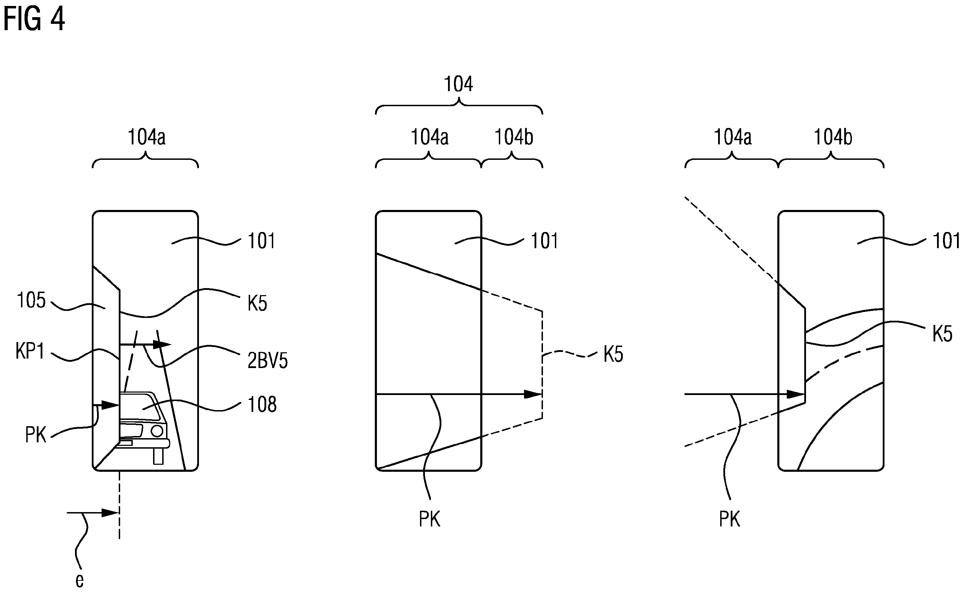

Figur 4 zeigt links, in der Mitte und rechts jeweils einen Monitor 101 mit unterschiedlichen Bildausschnitten 104a, 104b des Kamerabilds 104. Die folgende Beschreibung bezieht sich zunächst auf den linken Teil der Figur 4. Der hier dargestellte Bildausschnitt 104a zeigt alle für den Fahrer in dieser Situation relevanten Informationen: Den Anhänger 105 mit seiner hinteren Kante K5 sowie als Objekt 108 der Umgebung 109 einen nachfolgenden PKW.

In einem dritten Schritt des erfindungsgemäßen Verfahrens wird eine Bayes-Schätzung der Position der hinteren Kante K5 des Anhängers vorgenommen. Die horizontale Position der Kante K5 im kameralinsenentzerrten Kamerabild 104 wird mit e, die Menge der zur Verfügung stehenden Bewegungsvektoren 2BV5 wird mit v bezeichnet. Es wird vorausgesetzt, dass entsprechende Bewegungsvektoren 2BV5 an markanten Punkten KP1 von Interesse aus zwei oder mehr aufeinanderfolgenden Kamerabildern 104 bestimmt wurden. Dies erfolgt beispielsweise durch optischen Fluss, Pixelvergleich oder Merkmalsvergleich.

Unter Zuhilfenahme des Satzes von Bayes wird nun die wahrscheinlichste Hinterkantenposition e, in der Abbildung als wahrscheinlichste Position PK bezeichnet, im Kamerabild 104 wie folgt bestimmt:

$$e = \text{argmax\_e}\{ \ P(e|v) \ \} = \text{argmax\_e}\{ \ P(v|e) \ * \ P(e) \ \}.$$

Hierbei bezeichnet P(e) die A-Priori-Wahrscheinlichkeit dafür, dass sich die Anhängerhinterkante K5 im aktuellen Kamerabild 104 an der Position e befindet. Sie berechnet sich aus

$$P(e) = P\_model(e) \ * \ P\_image(e),$$

wobei P_model(e) aus bereits bestimmten Positionen der Anhängerkante K5 in vorhergehenden Kamerabildern 104 sowie aus dem Modell 107 der Umgebung 109 aus dem ersten Schritt 1 generiert wird. P_image(e) wird dagegen aus aktuellen Bildintensitäten und/oder Farben des aktuellen Kamerabildes 104 generiert.

Falls weder vorherige Positionen der Kante K5 des Anhängers bestimmt wurden, noch das Modell 107 der Umgebung 109 einen Anhaltspunkt liefert, zum Beispiel wenn ein Parameter wie der Knickwinkel ALPHA unbekannt ist, wird Pmodel(e) ohne Beschränkung der Allgemeinheit gleichverteilt angenommen. Gemäß anderer Ausführungsformen wird zugunsten einer effizienten Berechnung eine Normalverteilung angenommen, die durch Mittelwert, das heißt der wahrscheinlichsten Kantenposition der Kante K5, und Varianz, das heißt der Unsicherheit in der Position der Kante K5, vollständig beschrieben wird. Da zwischen Anhänger 105 und Umgebung 109 oftmals ein deutlicher Farbunterschied besteht, bietet es sich an, diese Information als P_image(e) in die Berechnung einfließen zu lassen. Jegliche Art von Ableitung entlang des horizontalen Pfades möglicher Anhängerkantenpositionen e kann hierzu zur Anwendung kommen. Beispielsweise finite Differenzen zwischen aufeinanderfolgenden Pixelintensitäten oder entsprechende Abstände im Farbraum, wobei zur Unterdrückung des Bildrauschens optional zuvor tiefpassgefiltert wird. Neben der nachfolgenden obligatorischen Normierung auf die Gesamtwahrscheinlichkeit 1 wird optional zuvor mit Abbildungsfunktionen wie 1-exp(-x) oder 1-1/(x+1) entsprechend der menschlichen Kontrastwahrnehmung normiert.

Es bezeichnet weiterhin P(v|e) die A-Posteriori-Wahrscheinlichkeit dafür, dass die durch optischen Fluss o. ä. bestimmten - und daher bekannten aber nicht immer richtigen - Bewegungsvektoren 1BV5 bei einer angenommenen Position der Kante K5 des Anhängers 105 auftreten. Bei nur einem Bewegungsvektor v = {v_1} folgen sie direkt aus der Wahrscheinlichkeitsverteilung, die aus der Vorhersage des Bewegungsvektors 1BV5, der hier v_1 entspricht, hervorgeht.

Auch hier kommen optional zur Vereinfachung Normalverteilungen zur Anwendung, die durch Mittelwert, das heißt dem vorhergesagten zweidimensionalen Bewegungsvektor im Kamerabild 104, und Varianz, das heißt dessen Unsicherheit, vollständig beschrieben werden.

Falls, wie im Regelfall, mehrere Vektoren v = {v_1, v_2, v_3, ...} für mehrere markante Punkte KP1 von Interesse existieren, berechnet sich P(v|e) aus

$$P(v|e) = P(v\_1|e) * P(v\_2|e) * P(v\_3|e) * ...,$$

da alle Vektoren gleichzeitig beobachtet wurden und daher die entsprechenden Auftretensereignisse verundet, das heißt durch Und-Operationen verknüpft werden. Bei Normalverteilungen vereinfacht sich die Berechnung durch Logarithmierung signifikant, was aufgrund der Monotonität der Logarithmusfunktion keinen Einfluss auf die Maximierung hat.

Falls das Verfahren zur Bestimmung der Bewegungsvektoren aus der Bildinformation (optischer Fluss, etc.) für jeden Bewegungsvektor zusätzlich ein Verlässlichkeitsmaß w_1, w_2, w_3,... liefert, werden die Auftretenswahrscheinlichkeiten gemäß einer weiteren Ausführungsform jeweils mit dem Verlässlichkeitsmaß gewichtet, das heißt potenziert:

$$P(v|e) = P(v\_1|e)^{w\_1} * P(v\_2|e)^{w\_2} * P(v\_3|e)^{w\_3} * ....$$

Dies geht nach Logarithmierung in herkömmliche Multiplikation über.

Optional wird das Verfahren zur Bestimmung der Bewegungsvektoren 1BV5, 1BV8 aus der Bildinformation (optischer Fluss, etc.) im Regelfall mit einem vermuteten Bewegungsvektor initialisiert. Dies beschleunigt die Berechnung, und verbessert auch die Korrektheit der bestimmten Bewegungsvektoren 1BV5, 1BV8. Durch die Bewegungsvektorvorhersage besteht eine Vermutung über den Bewegungsvektor 1BV5, 1BV8, die jedoch stark vom untersuchten Wert der Position e abhängt, je nachdem ob die Position von Interesse zum Anhänger 105 gehört, sogenannte Anhängerhypothese, oder ob die Position von Interesse zur Umgebung gehört, sogenannte Umgebungshypothese. Abhängig vom im Maximierungprozess gegebenen e wird die Bestimmung daher entweder unter der Vermutung der Umgebungshypothese oder unter Vermutung der Anhängerhypothese initialisiert. Die Bewegungsvektorbestimmung braucht hierzu nicht für jeden untersuchten Wert der Position e ausgeführt werden. Es genügt, sie einmal für die Umgebungshypothese und einmal für die Anhängerhypothese auszuführen.

Eine einfachere Alternative zur Bayes-Schätzung besteht darin, dass anstelle der beschriebenen Bayes'schen Entscheidung ein beliebiges einfacheres Verfahren verwendet wird, um die Unstetigkeitsposition zu erkennen, an der die Bewegungsvektoren 1BV5, 1BV8 sich stark zwischen Anhänger 105 und Umgebung 109 unterscheiden. Zugunsten der Robustheit bezüglich Bewegungsvektorstörungen werden in diesem Fall Bewegungsvektoren, die sich stark von der Bewegungsvektorprädiktion unterscheiden, sogenannte Ausreißer, aussortiert.

Bei Kurveneinfahrt des Gespanns 106 wandert die Kante K5 von der im linken Teil der Figur 4 dargestellten Position ausgehend aus dem auf dem Monitor 101 dargestellten Bildausschnitt 104a heraus in den Bildausschnitt 104b. Dies ist im mittleren Teil der Figur 4 gezeigt, in dem der Bildausschnitt 104a auf dem Monitor 101 sichtbar ist, und der Bildausschnitt 104b rechts neben dem Monitor liegt, also für den Fahrer nicht sichtbar ist.

Der auf dem Monitor 101 dargestellte Bildausschnitt wird erfindungsgemäß entsprechend der als wahrscheinlichster Position PK der Kante K5 bestimmten Position nachgeführt. Wie im rechten Teil der Figur 4 gezeigt, wird dann der Bildausschnitt 104b auf dem Monitor 101 dargestellt, in dem die hintere Kante 5 des Anhängers 105 wieder für den Fahrer sichtbar ist. Mit der Kante 5 sind dann auch wieder die dahinterliegenden Teile der Umgebung 109 für den Fahrer sichtbar. Der Bildausschnitt 104a, der in dieser Situation keine für den Fahrer relevante Information enthält, ist hier links neben dem Monitor 101, also auf diesem nicht sichtbar, angedeutet.

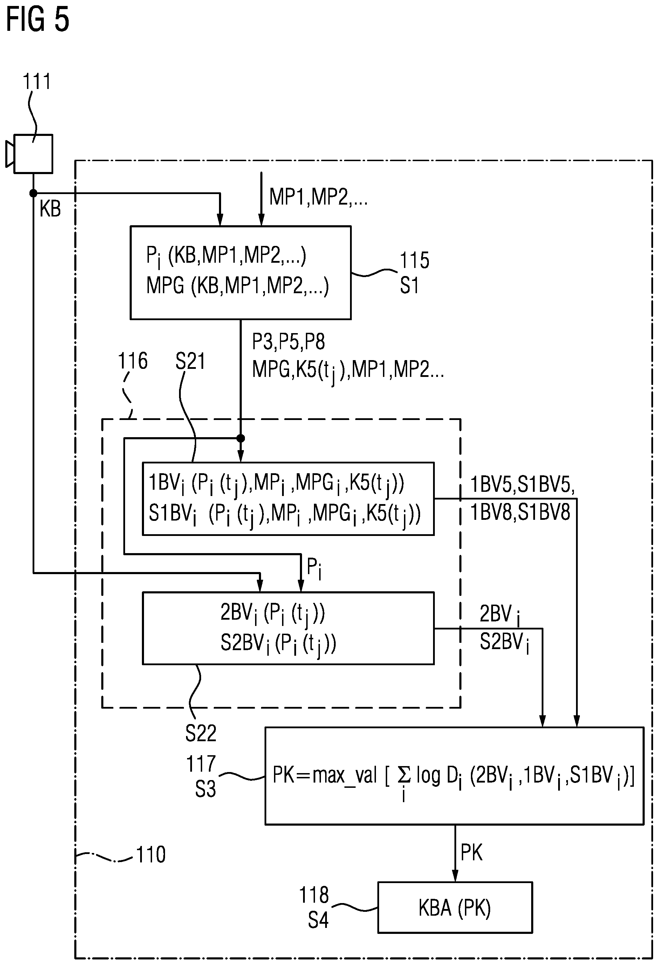

Figur 5 zeigt eine erfindungsgemäße Steuerungseinheit 110 und ein Flussdiagramm des erfindungsgemäßen Verfahrens. Die Steuerungseinheit 110 hat eine Modellbildungseinheit 115, eine Bewegungsvektor-Bestimmungs-Einheit 116, eine Kantenposition-Bestimmungs-Einheit 117 und eine Bildausschnitt-Nachführungs-Einheit 118. Ein Ausgang der Kamera 111 ist mit einem Eingang der Modellbildungseinheit 115 und einem Eingang der Bewegungsvektor-Bestimmungs-Einheit 116 verbunden. In der Modellbildungseinheit 115 wird ein Schritt S1 ausgeführt. Ihr Ausgang ist mit einem Eingang der Bewegungsvektor-Bestimmungs-Einheit 116 und einem Eingang der Kantenposition-Bestimmungs-Einheit 117 verbunden. In der Bewegungsvektor-Bestimmungs-Einheit 116 werden ein erster Schritt S21 und/oder ein alternativer zweiter Schritt S22 ausgeführt, ihre Ausgänge sind mit der Kantenposition-Bestimmungs-Einheit 117 verbunden. In dieser wird ein dritter Schritt S3 ausgeführt, ihr Ausgang ist mit der Bildausschnitt-Nachführungs-Einheit 118 verbunden. In dieser wird ein vierter Schritt S4 ausgeführt.

Im ersten Schritt S1 wird aus dem Kamerabild KB der Kamera 111 und Modellparametern MP1, MP2, ... ein dreidimensionales Modell 107 des Gespanns 106 und seiner Umgebung 109 bestimmt. Die Modellparameter sind dabei vorzugsweise die oben genannten, wie die Position des Kupplungspunkts KUP, der Knickwinkel ALPHA etc., oder andere geeignete Parameter. Der erste Schritt S1 liefert Objektpositionen P3, P5, P8 von Fahrzeug 103, Anhänger 105 sowie von weiteren Objekten 108 und dazugehörige Positionsvarianzwerte SP3, SP5, SP8, mit

$$Pi = Pi(KB, MP1, MP2,…) , SPi = SPi(KB, MP1, MP2, …).$$

Im zweiten Schritt S21 werden aus den Objektpositionen P3, P5, P8 mehrerer zeitlich aufeinanderfolgender Kamerabilder KB erste Bewegungsvektoren 1BV5, 1BV8 bestimmt. Der zweite Schritt liefert diese sowie dazugehörige erste Bewegungsvektorvarianzwerte S1BV5, S1BV8. Die Bewegungsvektoren 1BVi hängen von den Objektpositionen Pi(tj) zu unterschiedlichen Zeitpunkten tj ab, das heißt von zeitlich aufeinanderfolgenden Kamerabildern KB(tj):

$$1BVi = 1BVi(Pi(tj)), S1BVi = S1BVi(Pi(tj)).$$

Im alternativen zweiten Schritt S22 werden aus mehreren zeitlich aufeinanderfolgenden Kamerabildern KB zweite Bewegungsvektoren 2BV5 eines oder mehrerer markanter Punkte KP1 der hinteren Kante K5 des Anhängers 105 bestimmt. Der alternative zweite Schritt liefert die zweiten Bewegungsvektoren 2BV5 sowie dazugehörige zweite Bewegungsvektorvarianzwerte S2BV5. Die zweiten Bewegungsvektoren 2BV5 und ihre Varianzwerte S2BV5 hängen von den Positionen der Kante K5(tj) zu unterschiedlichen Zeitpunkten tj ab:

$$2BV5 = 2BV5(K5(tj)), S2BV5 = S2BV5(K5(tj)).$$

Im dritten Schritt S3 wird die wahrscheinlichste Position PK der hinteren Kante K5 des Anhängers 105 aus den Positionswerten P3, P5, P8 und den Positionsvarianzwerten SP3, SP5, SP8 aus Schritt S1, und/oder aus den Bewegungsvektoren 1BVi und den Positionsvarianzwerten S1BVi aus Schritt S21 und/oder den Varianzwerten S2BVi und den zweiten Bewegungsvektoren 2BVi bestimmt:

$$PK = PK( \text{max\_val}\{ \sum_i D_i(x, Pi, SPi)\} )$$

und/oder

$$PK = PK( \text{max\_val}\{ \sum_i D_i(x, Pi + JBVi, SPi + SJBVi)\} )$$
$$\text{mit } J = 1,2.$$

Gegebenenfalls werden die Bewegungsvektoren noch mit einem Anpassungsfaktor multipliziert. Dabei wird eine Verteilungsfunktion Di verwendet, zum Beispiel die Gauß'sche Normalverteilung:

$$D_i(x, Pi, SPi) = \frac{1}{\sqrt{2\pi\, SPi}} e^{-\frac{(x-Pi)^2}{2SPi}}.$$

Hier wird der Wert für die wahrscheinlichste Position PK entweder aus einer der oben genannten Formeln bestimmt, oder aus mehreren dieser Formeln wird ein Mittelwert bestimmt, oder PK wird als derjenige Wert bestimmt, bei dem die aus Positionswerten und aus Bewegungsvektoren gebildete Summe maximal wird:

$$PK = PK( \text{max\_val}\{ \sum_i D_i(x, Pi + JBVi, SPi + SJBVi) + \sum_j D_j(x, Pj, SPj)\} )$$
$$\text{mit } J = 1,2.$$

Es liegt im Ermessen des Fachmanns, je nach gegebenen Randbedingungen, auch andere Kombinationen oder Vereinfachungen zu wählen.
Im vierten Schritt S4 wird der Bildausschnitt KBA des Kamerabildes KB entsprechend der wahrscheinlichste Position PK der hinteren Kante K5 des Anhängers 105 angepasst:

$$KBA = KBA(PK).$$

**Patentansprüche**

1.  Verfahren zur Nachführung eines auf einem Monitor (101) zum Ersatz eines Außenspiegels (102) eines Fahrzeugs (103) dargestellten Bildausschnitts (104a, 104b) eines Kamerabildes (104) bei Kurvenfahrt eines aus dem Fahrzeug (103) und einem Anhänger (105) bestehenden Gespanns (106), wobei

    - der Bildausschnitt (104a, 104b) entsprechend einer wahrscheinlichsten Position (PK) zumindest eines markanten Punkts (KP1) auf dem Anhänger (105) nachgeführt wird,
    **dadurch gekennzeichnet , dass** zum Ermitteln der wahrscheinlichsten Position (PK):
    - ein dreidimensionales Modell (107) mit der Objektposition (P3, P5, P8) zumindest eines Objekts (103, 105, 108) aus dem Kamerabild (104, KB) mittels eines Umgebungsrekonstruktions- und Objekterkennungsverfahrens und aus vorgegebenen Modellparametern (MP1, MP2, ...) bestimmt wird, wobei das zumindest eine Objekt (103, 105, 108) den Anhänger umfasst,
    - aus dem Kamerabild (104) ein Bewegungsvektor (1BV5, 2BV5) zu dem zumindest einen markanten Punkt (KP1) auf dem Anhänger (105) mittels einer Bayes-Schätzung oder mittels eines Verfahrens zur Erkennung einer Unstetigkeitsposition bestimmt wird,
    - die wahrscheinlichste Position (PK) des zumindest einen markanten Punkts (KP1) aus der Objektposition (P5) und der Bestimmung des Bewegungsvektors (1BV5, 2BV5) bestimmt wird, wobei die wahrscheinlichste Position (PK) einer Kante des Anhängers bestimmt wird als Wert, an dem eine A-Posteriori-Wahrscheinlichkeit einen Maximalwert erreicht.

2.  Verfahren nach Anspruch 1, wobei als Modellparameter (MP1, MP2, ...) für das dreidimensionale Modell (107) zumindest eines der folgenden verwendet wird:

    - die Umgebung (109) als flache Ebene (E1),
    - der Anhänger (105) als Quader (Q1) mit senkrecht zur flachen Ebene (E1) stehenden Seitenflächen (S1),
    - der Kupplungspunkt (KUP) von Fahrzeug (103) und Anhänger (105),
    - Breite (BA) und/oder Länge (LA) des Anhängers (105).

3.  Verfahren nach Anspruch 2, wobei für einige der Modellparameter (KUP, BA) fixe Annahmen, und für andere Modellparameter (BA, LA) Schätzungen verwendet werden.

4.  Verfahren nach einem der vorhergehenden Ansprüche, wobei

    - Positionsvarianzwerte (SP5, SP8) zu Objektpositionen(P5, P8) des dreidimensionalen Modells (107), und
    - Bewegungsvektorvarianzwerte (S1BV5, S2BV5) zu den Bewegungsvektoren (1BV5, 2BV5) bestimmt werden, und daraus
    - die wahrscheinlichste Position (PK) des Punkts (KP1) bestimmt wird als Position, bei der die A-Posteriori-Wahrscheinlichkeit einen Maximalwert erreicht.

5.  Verfahren nach Anspruch 4, wobei als Bewegungsvektor und Bewegungsvarianzwert aus dem Modell (107) mindestens ein erster Bewegungsvektor (1BV5, 1BV8) und mindestens ein erster Bewegungsvektorvarianzwert (S1BV5, S1BV8) für zumindest ein Objekt (105, 108) des Modells (107) bestimmt wird, indem in einem ersten Schritt (S1) aus dem Kamerabild (KB) der Kamera (111) und Modellparametern (MP1, MP2, ...) das dreidimensionale Modell (107) des Gespanns (106) und seiner Umgebung (109) bestimmt wird und somit der erste Schritt (S1) die Objektpositionen Pi (P3, P5, P8) von Fahrzeug (103), Anhänger (105) sowie von weiteren Objekten (108) und dazugehörige Positionsvarianzwerte (SP3, SP5, SP8) liefert, mit

    $$Pi = Pi(KB, MP1, MP2,…) \; , \; SPi = SPi(KB, MP1, MP2, …),$$

    und in einem zweiten Schritt (S21) aus den Objektpositionen (P3, P5, P8) mehrerer zeitlich aufeinanderfolgender Kamerabilder (KB) erste Bewegungsvektoren (1BV5, 1BV8) bestimmt werden und der zweite Schritt diese sowie dazugehörige erste Bewegungsvektorvarianzwerte (S1BV5, S1BV8) liefert, wobei die Bewegungsvektoren 1BVi von den Objektpositionen Pi(tj) zu unterschiedlichen Zeitpunkten tj abhängen, das heißt von zeitlich aufeinanderfolgenden Kamerabildern KB(tj):

$$1BVi = 1BVi(Pi(tj)), \quad S1BVi = S1BVi(Pi(tj)).$$

**6.** Verfahren nach einem der Ansprüche 4 oder 5, wobei als Bewegungsvektor und Bewegungsvarianzwert mindestens ein zweiter Bewegungsvektor (2BV5) und mindestens ein zweiter Bewegungsvektorvarianzwert (S2BV5) zu zumindest einem markanten Punkt (KP1) auf dem Anhänger (105) bestimmt wird.

**7.** Steuerungseinheit (110) zur Nachführung eines auf einem Monitor (101) zum Ersatz eines Außenspiegels (102) eines Fahrzeugs (103) dargestellten Bildausschnitts (104a, 104b) eines Kamerabildes (104) bei Kurvenfahrt eines aus dem Fahrzeug (103) und einem Anhänger (105) bestehenden Gespanns (106), aufweisend:

- eine Modellbildungseinheit (115) mittels der ein dreidimensionales Modell (107) mit der Objektposition (P3, P5, P8) zumindest eines Objekts (103, 105, 108) aus dem Kamerabild (104, KB) und vorgegebenen Modellierungsparametern (MP1, MP2, ...) bestimmt wird,
- eine Bewegungsvektor-Bestimmungs-Einheit (116) mittels der aus dem Kamerabild (104) ein Bewegungsvektor (1BV5, 2BV5) zu zumindest einem markanten Punkt (KP1) auf dem Anhänger (105) bestimmt wird,
- eine Kantenpositions-Bestimmungs-Einheit (117) mittels der die wahrscheinlichste Position (PK) des Punkts (KP1) aus der Objektposition (P5) und der Bestimmung des Bewegungsvektors (1BV5, 2BV5) bestimmt wird, und
- eine Bildausschnitt-Nachführungs-Einheit (118) mittels der der Bildausschnitt (KBA, 104a, 104b) entsprechend der wahrscheinlichsten Position (PK) des Punkts (KP1) nachgeführt wird,
wobei die Steuerungseinheit (110) dazu eingerichtet ist, ein Verfahren nach einem der vorhergehenden Ansprüche durchzuführen.

## Claims

**1.** Method for updating an image portion (104a, 104b) of a camera image (104), depicted on a monitor (101) for the purposes of replacing an external mirror (102) of a vehicle (103), during the cornering of a train (106) consisting of the vehicle (103) and a trailer (105),

- the image portion (104a, 104b) being updated in accordance with a most probable position (PK) of at least one prominent point (KP1) on the trailer (105),
**characterized in that**
the following is carried out to determine the most probable position (PK):

- a three-dimensional model (107) with the object position (P3, P5, P8) of at least one object (103, 105, 108) from the camera image (104, KB) is determined by means of a surround reconstruction and object recognition method and from specified model parameters (MP1, MP2, ...), the at least one object (103, 105, 108) comprising the trailer,
- a movement vector (1BV5, 2BV5) to the at least one prominent point (KP1) on the trailer (105) is determined from the camera image (104) by means of a Bayes estimate or by means of a method for recognizing a position of discontinuity,
- the most probable position (PK) of the at least one prominent point (KP1) is determined from the object position (P5) and the determination of the movement vector (1BV5, 2BV5), the most probable position (PK) of an edge of the trailer being determined as a value for which an a posteriori probability obtains a maximum value.

**2.** Method according to Claim 1, wherein at least one of the following is used as a model parameter (MP1, MP2, ...) for the three-dimensional model (107):

- the surround (109) as a flat plane (E1),
- the trailer (105) as a cuboid (Q1) with side faces (S1) perpendicular to the flat plane (E1),
- the coupling point (KUP) between vehicle (103) and trailer (105),
- width (BA) and/or length (LA) of the trailer (105).

3. Method according to Claim 2, wherein fixed assumptions are used for some of the model parameters (KUP, BA) and estimates are used for other model parameters (BA, LA).

4. Method according to any one of the preceding claims, wherein

   - position variance values (SP5, SP8) in relation to object positions (P5, P8) of the three-dimensional model (107) and
   - movement vector variance values (S1BV5, S2BV5) for the movement vectors (1BV5, 2BV5) are determined, and these are used
   - to determine the most probable position (PK) of the point (KP1) as the position at which the a posteriori probability obtains a maximum value.

5. Method according to Claim 4, wherein at least one first movement vector (1BV5, 1BV8) and at least one first movement vector variance value (S1BV5, S1BV8) are determined for at least one object (105, 108) of the model (107) as movement vector and movement variance value from the model (107) by virtue of the three-dimensional model (107) of the train (106) and its surround (109) being determined in a first step (S1) from the camera image (KB) of the camera (111) and model parameters (MP1, MP2, ...) and consequently the first step (S1) supplying the object positions Pi (P3, P5, P8) of the vehicle (103), trailer (105) and further objects (108) and associated position variance values (SP3, SP5, SP8), where

$$Pi = Pi(KB, MP1, MP2, \ldots), \quad SPi = SPi(KB, MP1, MP2, \ldots),$$

   and by virtue of first movement vectors (1BV5, 1BV8) being determined from the object positions (P3, P5, P8) of a plurality of temporally successive camera images (KB) in a second step (S21) and the second step supplying said movement vectors and associated first movement vector variance values (S1BV5, S1BV8), the movement vectors 1BVi depending on the object positions Pi(tj) at different times tj, that is to say depending on temporally successive camera images KB(tj):

$$1BVi = 1BVi(Pi(tj)), \quad S1BVi = S1BVi(Pi(tj)).$$

6. Method according to either of Claims 4 and 5, wherein at least one second movement vector (2BV5) and at least one second movement vector variance value (S2BV5) in relation to at least one prominent point (KP1) on the trailer (105) are determined as movement vector and movement variance value.

7. Control unit (110) for updating an image portion (104a, 104b) of a camera image (104), depicted on a monitor (101) for the purposes of replacing an external mirror (102) of a vehicle (103), during the cornering of a train (106) consisting of the vehicle (103) and a trailer (105), comprising:

   - a model formation unit (115) by means of which a three-dimensional model (107) with the object position (P3, P5, P8) of at least one object (103, 105, 108) is determined from the camera image (104, KB) and specified modelling parameters (MP1, MP2, ...),
   - a movement vector determination unit (116) by means of which a movement vector (1BV5, 2BV5) to at least one prominent point (KP1) on the trailer (105) is determined from the camera image (104),
   - an edge position determination unit (117) by means of which the most probable position (PK) of the point (KP1) is determined from the object position (P5) and the determination of the movement vector (1BV5, 2BV5), and
   - an image portion update unit (118) by means of which the image portion (KBA, 104a, 104b) is updated in accordance with the most probable position (PK) of the point (KP1),
   with the control unit (110) being configured to carry out the method according to any one of the preceding claims.

**Revendications**

1. Procédé permettant de suivre une section d'image (104a, 104b) d'une image de caméra (104), représentée sur un moniteur (101) pour remplacer un rétroviseur extérieur (102) d'un véhicule (103), lors du passage dans un virage d'un attelage (106) composé du véhicule (103) et d'une remorque (105), dans lequel

- la section d'image (104a, 104b) est suivie selon une position la plus probable (PK) au moins d'un point de repère (KP1) sur la remorque (105), **caractérisé en ce que** pour établir la position la plus probable (PK) :
- un modèle tridimensionnel (107) ayant la position d'objet (P3, P5, P8) d'au moins un objet (103, 105, 108) est déterminé à partir de l'image de caméra (104, KB) au moyen d'un procédé de reconstruction d'environnement et de reconnaissance d'objet et à partir de paramètres de modèle prédéfinis (MP1, MP2, ...), ledit au moins un objet (103, 105, 108) comprenant la remorque,
- à partir de l'image de caméra (104), un vecteur de mouvement (1BV5, 2BV5) vers ledit moins un point de repère (KP1) sur la remorque (105) est déterminé au moyen d'une estimation de Bayes ou au moyen d'un procédé de reconnaissance d'une position de discontinuité,
- la position la plus probable (PK) du au moins un point de repère (KP1) est déterminée à partir de la position d'objet (P5) et de la détermination du vecteur de mouvement (1BV5, 2BV5), la position la plus probable (PK) d'un bord de la remorque étant déterminée comme la valeur à laquelle une probabilité a posteriori atteint une valeur maximale.

2. Procédé selon la revendication 1, dans lequel, comme paramètre de modèle (MP1, MP2, ...) pour le modèle tridimensionnel (107), au moins l'un des suivants est utilisé :

   - l'environnement (109) en tant que surface plane (E1),
   - la remorque (105) en tant que parallélépipède (Q1) ayant des faces latérales (S1) perpendiculaires à la surface plane (E1),
   - le point d'accouplement (KUP) du véhicule (103) et de la remorque (105),
   - la largeur (BA) et/ou la longueur (LA) de la remorque (105).

3. Procédé selon la revendication 2, dans lequel des hypothèses fixes sont utilisées pour certains des paramètres de modèle (KUP, BA), et des estimations sont utilisées pour d'autres paramètres de modèle (BA, LA).

4. Procédé selon l'une quelconque des revendications précédentes, dans lequel

   - des valeurs de variance de position (SP5, SP8) concernant des positions d'objet (P5, P8) du modèle tridimensionnel (107), et
   - des valeurs de variance de vecteur de mouvement (S1BV5, S2BV5) concernant les vecteurs de mouvement (1BV5, 2BV5) sont déterminées, et à partir de celles-ci
   - la position la plus probable (PK) du point (KP1) est déterminée comme la position à laquelle la probabilité a posteriori atteint une valeur maximale.

5. Procédé selon la revendication 4, dans lequel, comme vecteur de mouvement et comme valeur de variance de mouvement, au moins un premier vecteur de mouvement (1BV5, 1BV8) et au moins une première valeur de variance de vecteur de mouvement (S1BV5, S1BV8) sont déterminés à partir du modèle (107) pour au moins un objet (105, 108) du modèle (107), en ce que

   dans une première étape (S1), le modèle tridimensionnel (107) de l'attelage (106) et de son environnement (109) est déterminé à partir de l'image de caméra (KB) de la caméra (111) et des paramètres de modèle (MP1, MP2, ...), et ainsi la première étape (S1) fournit les positions d'objet Pi (P3, P5, P8) du véhicule (103), de la remorque (105) ainsi que d'autres objets (108) et des valeurs de variance de position associées (SP3, SP5, SP8), où
   Pi = Pi (KB, MP1, MP2, ...), SPi = SPi (KB, MP1, MP2, ...),
   et dans une deuxième étape (S21), des premiers vecteurs de mouvement (1BV5, 1BV8) sont déterminés à partir des positions d'objet (P3, P5, P8) de plusieurs images de caméra consécutives (KB), et la deuxième étape fournit celles-ci ainsi que des premières valeurs de variance de vecteur de mouvement (S1BV5, S1BV8) associées, les vecteurs de mouvement 1BVi dépendant des positions d'objet Pi(tj) à différents instants tj, c'est-à-dire d'images de caméra KB(tj) consécutives dans le temps :

$$1BVi = 1BVi(Pi(tj)), \quad S1BVi = S1BVi(Pi(tj)).$$

6. Procédé selon l'une quelconque des revendications 4 ou 5, dans lequel au moins un deuxième vecteur de mouvement (2BV5) et au moins une deuxième valeur de variance de vecteur de mouvement (S2BV5) pour au moins un point de repère (KP1) sur la remorque (105) sont déterminés comme vecteur de mouvement et comme valeur de variance de mouvement.

7. Unité de commande (110) permettant de suivre une section d'image (104a, 104b) d'une image de caméra (104), représentée sur un moniteur (101) pour remplacer un rétroviseur extérieur (102) d'un véhicule (103), lors du passage dans un virage d'un attelage (106) composé du véhicule (103) et d'une remorque (105), présentant :

- une unité de création de modèle (115) au moyen de laquelle un modèle tridimensionnel (107) ayant la position d'objet (P3, P5, P8) d'au moins un objet (103, 105, 108) est déterminé à partir de l'image de caméra (104, KB) et de paramètres de modélisation prédéfinis (MP1, MP2, ...),
- une unité de détermination de vecteur de mouvement (116) au moyen de laquelle un vecteur de mouvement (1BV5, 2BV5) vers ledit au moins un point de repère (KP1) sur la remorque (105) est déterminé à partir de l'image de caméra (104),
- une unité de détermination de position de bord (117) au moyen de laquelle la position la plus probable (PK) du point (KP1) est déterminée à partir de la position d'objet (P5) et de la détermination du vecteur de mouvement (1BV5, 2BV5), et
- une unité de suivi de section d'image (118) au moyen de laquelle la section d'image (KBA, 104a, 104b) est suivie selon la position la plus probable (PK) du point (KP1),
l'unité de commande (110) étant conçue pour exécuter un procédé selon l'une quelconque des revendications précédentes.

FIG 1

EP 3 293 971 B1

FIG 2

FIG 3

FIG 4

EP 3 293 971 B1

# FIG 5

**EP 3 293 971 B1**

**IN DER BESCHREIBUNG AUFGEFÜHRTE DOKUMENTE**

**In der Beschreibung aufgeführte Patentdokumente**

- JP 2002181518 A
- DE 102010006323 A1
- WO 2016024405 A2

**In der Beschreibung aufgeführte Nicht-Patentliteratur**

- **K. HÄMING ; G. PETERS.** The structure-from-motion reconstruction pipeline - a survey with focus on short image sequences. *Kybernetika,* 2010